# EUROPEAN PATENT APPLICATION

(11) **EP 4 715 500 A1**
(43) Date of publication of application: **25.03.2026**
(21) Application number: 24201282.1
(22) Date of filing: 19.09.2024
(51) Int. Cl.: G05B 19/05, G06Q 50/04, G06N 20/00, G06N 3/00

(54) **METHOD AND SYSTEM FOR MANAGING EVENTS IN A NETWORK OF PROGRAMMABLE LOGIC CONTROLLERS USING MACHINE LEARNING**

(71) Applicant: Siemens Aktiengesellschaft, 80333 München (DE)
(72) Inventor: H D, Ghanashyam, 577301 Bhadravathi, Karnataka (IN)
(74) Representative: Isarpatent

(57) **Abstract**

A method and system for managing events in a network of programmable logic controllers (PLCs) 102A-N using machine learning models 104A-N are disclosed. The method involves a first PLC 102A periodically receiving a data package from a second PLC 102B, where the data package includes information used by a first machine learning model 104A to identify occurrences of events in the second PLC 102B. The first PLC 102A retrains a second machine learning model 104B by applying a learning algorithm to the received data package, ensuring the model's accuracy and effectiveness. The retrained second machine learning model 104B is then deployed into at least a third PLC 102C. The third PLC 102C uses the retrained model to predict future occurrences of events and execute corrective actions based on these predictions, thereby managing and mitigating potential risks.

## Description

### Background

The present invention relates to the field of industrial automation and control systems. More specifically, the invention pertains to methods and systems for managing events in a network of programmable logic controllers (PLCs) using machine learning models.

In today's rapidly evolving industrial landscape, Programmable Logic Controllers (PLCs) play a pivotal role in automating and controlling various critical processes. These specialized computing devices are employed across a wide range of applications, from automation of car doors and management of conveyor belts in manufacturing plants to the control of high-altitude wind turbines and operations in underground coal mines. The primary purpose of PLCs is to provide reliable, real-time control over industrial machinery and processes, ensuring optimal performance and safety.

Traditional PLCs are often deployed in environments where continuous internet connectivity is available, enabling use of cloud-based machine learning (ML) models for monitoring and optimization. However, a significant challenge arises when PLCs are deployed in harsh environmental conditions, such as marine settings, high-altitude wind turbines, underground tunnels, and rail routes. The harsh environments are characterized by extreme temperatures, high mechanical loads, and exposure to chemical and biological agents. In such scenarios, PLCs must operate autonomously without access to the internet or a central server, making traditional cloud-based ML models impractical.

The lack of steady internet connectivity in such environments limits an implementation of conventional ML models in such PLCs. This is because that the conventional ML models rely on cloud-based computations. Thus conventional ML models, which depend on continuous network availability for communication and computation, are not suitable for such PLCs. Moreover, one of pressing problems in deploying conventional ML models for PLCs in harsh environments is the necessity of a network connection for training and continuous operation. Without a steady and reliable internet connection, the conventional ML models cannot be trained or updated, leading to high latency in decision-making and a lack of real-time adaptability. Additionally, sending data back and forth between the PLCs and a cloud server introduces significant delays, which can be detrimental in the harsh environments where timely interventions are critical. Importance of training ML models cannot be overstated, as it enables the PLCs to learn from historical data, identify patterns, predict potential anomalies, and optimize the performance of PLCs. Without the capability to train and update ML models on-site, the effectiveness and reliability of PLCs in harsh environments are severely compromised.

In light of above, there exists a need for an efficient method and system for managing events in a plurality of programmable logic controllers.

Thus, it is an object of the present invention to provide an efficient method and system for managing events in a plurality of PLCs.

The object of the invention is achieved by a method of managing events in a plurality of PLCs. The method is executed in any PLC of the plurality of PLCs of a PLC network. In one example, the plurality of machine learning models are a plurality of TinyML models. The plurality of TinyML models are a class of machine learning models designed to perform on-device inference with minimal computational resources. Examples of the plurality of machine learning models include decision trees, support vector machines, and compressed neural networks. The advantages of the plurality of machine learning models include low latency, reduced power consumption, enhanced security, and an ability to operate without continuous internet connectivity.

The plurality of programmable Logic Controllers (PLCs) are specialized computing devices used to control industrial processes. The plurality of PLCs are employed in various applications, such as automating car doors, managing conveyor belts in manufacturing plants, and controlling the operation of wind turbines. The purpose of the plurality of PLCs is to provide reliable, real-time control over industrial machinery and processes, ensuring optimal performance and safety.

The plurality of PLCs are deployed in harsh environmental conditions, including extreme temperatures, high mechanical loads, and exposure to chemical and biological agents. Examples of such harsh environments include marine settings, underground coal mines, high-altitude wind turbines, and rail routes. In such scenarios, the plurality of PLCs operate without access to the internet or a central server or controller, making traditional cloud-based machine learning models impractical.

The method is executed by an automation module which comprises computer-readable code that can be executed by a processing unit to implement the method. The automation module is a software component designed to manage and control various functions and processes within each PLC of the plurality of PLCs. The automation module interfaces with hardware components of the PLC, such as sensors, actuators, and communication interfaces, to execute control algorithms, monitor system performance, and respond to operational events.

Each PLC in the PLC network has an automation module embedded within. The automation module within each PLC is responsible for executing one or more of the plurality of machine learning models, and performing tasks such as data collection, real-time monitoring, and anomaly detection. The automation module ensures that each PLC can autonomously manage operations, adapt to changing conditions, and maintain optimal performance without the need for continuous external supervision.

The automation module addresses challenges posed by harsh environments and the lack of internet connectivity. By executing a retraining process within any one PLC of the plurality of PLCs in the PLC network, the automation module ensures that the plurality of machine learning models can be updated and optimized in real-time, without a need for external network resources. Thus, a reliability and performance of the plurality of PLCs is enhanced, ensuring that the plurality of PLCs continue to operate safely and efficiently in demanding conditions. The plurality of PLCs communicate with each other via the PLC network.

The plurality of PLCs comprises a second PLC and at least a third PLC. The plurality of PLCs is isolated from the internet. The plurality of PLCs further comprises a fourth PLC and a fifth PLC. The plurality of PLCs are connected to each other via a PLC network. The plurality of PLCs may include more than five PLCs, making the PLC network scalable for larger industrial applications.

The PLC network is a communication framework that allows the plurality of PLCs to exchange data and coordinate operations. An exemplary implementation of the PLC network is an automated manufacturing line where a set of PLCs control different segments of a production process. The PLC network employs various communication protocols, such as Modbus, Profibus, EtherNet/IP, and Profinet, to facilitate data exchange between the plurality of PLCs.

The PLC network may include both wired and wireless connections, providing flexibility in how the plurality of PLCs are interconnected. Wired connections, such as Ethernet or serial cables, are often used for stable and high-speed communication in controlled environments. Wireless connections, such as Wi-Fi or Bluetooth, can be employed in situations where wiring is impractical or where mobility is required.

Each PLC of the plurality of PLCs hosts a Machine Learning model. Each Machine Learning model hosted within each PLC is configured to monitor the plurality of performance parameters of the PLC dynamically. In one example, the Machine Learning model is a TinyML model, which is a compact and efficient form of machine learning designed for edge devices with limited computational resources. The plurality of performance parameters associated with the PLC includes various metrics that indicate an operational status and health of the PLC. Examples of the plurality of performance parameters are temperature, power consumption, communication load, error rates, and processing speed.

Normal operating conditions for a PLC are defined by a range of expected values for each performance parameter. For instance, a first performance parameter, a normal temperature, might range between 20 to 70 degrees Celsius, a second performance parameters, a normal power consumption, might range from 50 to 150 watts, and a third performance parameter, a normal communication load might range from 10 to 50 percent of network capacity. Error rates should remain below 0.1 percent, and processing speed should be within 80 to 100 percent of the PLC's rated capacity.

The machine learning model continuously monitors the plurality of performance parameters to detect any deviations from the established normal operating conditions. For example, the machine learning model may use an anomaly detection algorithm, such as Isolation Forest, to identify unusual patterns in the plurality of performance parameters. Isolation Forest works by creating a forest of random trees and isolating anomalies based on the path length from the root to the leaf node. Shorter paths indicate anomalies, while longer paths represent normal data points.

Suppose a temperature of a specific PLC suddenly rises to 85 degrees Celsius, a power consumption spikes to 180 watts, and a communication load increases to 70 percent. In such a case, the machine learning model is configured to recognize such values as deviations from the normal operating conditions. The anomaly detection algorithm within the machine learning model would isolate data points as anomalies due to significant deviation from the expected ranges.

The machine learning model is further configured to determine an occurrence of a plurality of events in the specific PLC. The plurality of events refers to significant incidents or anomalies that may impact a performance or a safety of the PLC. Examples of the plurality of events include overheating, unexpected power surges, communication failures, abnormal error rates, and deviations in processing speed.

The machine learning model is configured to determine the occurrence of the plurality of events by analyzing real-time data collected from the plurality of performance parameters. The machine learning model is configured to utilize one or more algorithms to identify patterns and correlations within the plurality of performance parameters of the PLC. When the machine learning model detects deviations that match known patterns of anomalies or predict potential issues, the machine learning model is configured to flags the detected deviations as events.

By dynamically monitoring the plurality of performance parameters and predicting the occurrence of the plurality of events, the machine learning model ensures that the PLC operates within safe and optimal conditions. The machine learning model is configured to identify and predict anomalies thereby allowing for timely interventions, preventing potential failures and ensuring a reliability and an efficiency of the PLC. Autonomous monitoring and decision-making capability is crucial for maintaining the operational integrity of PLCs, especially in environments where human oversight is limited or impractical.

The method comprises applying, by the second PLC, a first machine learning model on the plurality of performance parameters of the second PLC. The first machine Learning model is hosted in the second PLC. An example of the first machine learning model is a decision tree model designed to classify different states of the second PLC based on the plurality of performance parameters. The decision tree model uses thresholds and rules to determine whether the second PLC is operating normally or if the one or more events are occurring. For instance, if a temperature sensor reading exceeds a predefined threshold while power consumption spikes simultaneously, the decision tree model may classify this as an overheating event.

Another type of the first machine learning model is a support vector machine (SVM) model. The SVM model can be trained to identify patterns in the plurality of performance parameters that indicate potential events. By mapping the plurality of performance parameters into a high-dimensional space, the SVM model is configured create a decision boundary that separates normal operating conditions from anomalies.

The method further comprises determining, by the second PLC, an occurrence of one or more events in the second PLC based on the application of the first TinyML model on the plurality of performance parameters of the second PLC.

The one or more events refer to specific incidents or anomalies that may affect an operation of the second PLC. Examples of the one or more events include overheating, unexpected power surges, communication failures, abnormal error rates, and deviations in processing speed of the second PLC. By identifying these events, the automation module is enabled to implement corrective actions to address root causes of the one or more events.

Advantages of determining the one or more events are significant for maintaining the operational integrity and efficiency of the second PLC. By identifying the one or more events early, the automation module is enabled to take proactive measures to prevent potential failures, reduce downtime, and ensure safety of equipment and personnel. Timely detection of events allows for immediate intervention, which can mitigate the impact of anomalies and optimize the overall performance of the second PLC.

The method further comprises periodically sending, by the second PLC, a data package to the first PLC. The data package comprises information used by the first Machine Learning model to identify the occurrence of one or more events in the second PLC. The data package is a structured set of data that encapsulates necessary information for analysis and decision-making. The data package comprises at least a collected set of performance parameters, timestamps, sensor readings, metadata that describe an operational context of the second PLC, and historical event logs. Additional contents of the data package include configuration settings, system diagnostics, error messages, and any alerts that have been triggered within the second PLC. An example of a data structure used to represent the data package is a JSON object or a binary format that includes fields for each type of performance parameter, such as temperature, power consumption, communication load, error rates, processing speed, and event history.

The information used by the first machine learning model refers to a plurality of patterns and correlations, within the plurality of performance parameters, that the first machine learning model has utilized to identify the occurrence of the one or more events. For instance, the first machine learning model may be configured to recognize specific combinations of temperature spikes and increased power consumption as indicative of an overheating event. The patterns in the plurality of performance parameters are critical for the first machine learning model to make accurate predictions and classifications.

By periodically sending the data package from the second PLC to the first PLC, the automation module ensures that the first PLC receives up-to-date information about an operational status of the second PLC. The data package enables the first PLC to retrain one or more machine learning models based on latest patterns and trends observed in the second PLC. The continuous exchange of data packages allows the PLC network to maintain optimal performance and quickly adapt to any changes or anomalies that may arise.

In one example, the data package comprises information on a first sequence of operations performed in the second PLC before the occurrence of the one or more events. The first sequence of operations refers to one or more specific actions and processes executed by the second PLC leading up to the detected one or more events. Examples of the first sequence of operations include an activation of specific actuators, an adjustment of one or more control variables, an execution of maintenance routines, and interactions with other PLCs or systems within the PLC network.

Including the first sequence of operations in the data package is crucial for several reasons. For example, the first sequence of operations provides a contextual understanding of the one or more events, allowing the plurality of machine learning models to identify patterns and correlations between operations and subsequent events. For example, if the second PLC consistently performs a series of operations that lead to an overheating event, the first machine learning model can learn to recognize patterns and predict future occurrences. By periodically sending the data package from the second PLC to the first PLC, which includes the first sequence of operations, the automation module ensures that the first PLC has comprehensive and up-to-date information about an operational status of the second PLC.

The method further comprises periodically receiving, by the first PLC, the data package from the second PLC. The method further comprises retraining, by the first PLC, a second Machine Learning model by applying a learning algorithm on the received data package. The retraining of the second machine learning algorithm is executed within the first PLC. A retraining process involves updating one or more parameters of the second machine learning model based on new data contained in the data package received from the second PLC. The retraining process ensures that the second machine learning model remains accurate and effective in identifying and predicting the one or more events.

Examples of the learning algorithms used to retrain the second Machine Learning model include a gradient descent algorithm, a stochastic gradient descent algorithm, and a reinforcement learning algorithm. In the case where the second machine learning model is of a decision tree model, the learning algorithm involves recursively partitioning the new data based on attribute values to create a more refined tree. For a support vector machine (SVM) model, the learning algorithm includes updating a hyperplane that separates different classes based on new data points in the data package.

Retraining the second machine learning model within the first PLC offers several advantages. For example, executing the retraining process locally within the first PLC eliminates a need for continuous internet connectivity for the plurality of PLCs. Thus, the retraining process can be executed in the plurality of PLCs which are deployed in harsh environment which lack continuous internet connectivity, even in the absence of external network resources.

Furthermore, local retraining enhances a security of the PLC network by avoiding a transmission of sensitive data to external cloud servers. Moreover, local retraining reduces latency. Thus, the second Machine Learning model is updated as soon as the first PLC receives the data package, without waiting for data to be transmitted to and from a central server. Thus, the PLC network is enabled to quickly adapt to new conditions and respond to events as they occur.

The method further comprises deploying, by the first PLC, the retrained second Machine Learning model into at least the third PLC. The deployment process involves transferring the updated model parameters and structure from the first PLC to at least the third PLC. Examples of deployment include using secure communication protocols such as MQTT or HTTPS to ensure an integrity and confidentiality of the second machine learning model during transfer. Once transferred, at least the third PLC integrates the retrained second Machine Learning model into an operational framework of at least the third PLC.

It is noted that the data package comprises information about the first sequence of operations performed in the second PLC before the occurrence of the one or more events. In one example, the deployed second Machine Learning model is configured to detect a second sequence of operations in at least the third PLC. The second sequence of operations is similar to the first sequence of operations. The relevance of detecting the second sequence of operations lies in an ability to identify recurring patterns and predict potential events before such events escalate into significant issues.

The second sequence of operations refers to a specific series of actions and processes executed by at least the third PLC. The second sequence of operations closely resemble those observed in the first sequence of operations within the second PLC. By recognizing a similarity between the first and second sequence of operations, the retrained second machine learning model is enabled to proactively identify conditions that may lead to the occurrence of one or more events, such as overheating, unexpected power surges, or communication failures in at least the third PLC.

Advantageously, detection of the second sequence of operations allows for early intervention of potential events. By identifying similar operational patterns, the automation module is enabled to take corrective actions before any detrimental events occur, thereby minimizing a downtime of at least the third PLC and ensuring continuous operation of the PLC network.

Furthermore, an ability to detect similar sequences of operations across the plurality of PLCs within the PLC network ensures a cohesive and coordinated response to potential issues. When the retrained second machine learning model identifies the second sequence of operations in at least the third PLC, the automation module is enabled to implement standardized protocols and procedures. Thus an overall efficiency and effectiveness of the PLC network is increased.

The deployed second machine learning model is utilizable by at least the third PLC to predict a future occurrence of at least one event in at least the third PLC. The retrained second machine learning model leverages a set of patterns and correlations learned during the retraining process, including the first sequence of operations, to make an accurate prediction of the future occurrence of the at least one event. For instance, if the second machine learning model has identified that a specific combination of rising temperature and increased power consumption in the second PLC led to an overheating event, the second machine learning model is configured to detect similar patterns in the plurality of performance parameters of at least the third PLC to predict the future occurrence of the at least one event in at least the third PLC.

The at least one event is similar to the one or more events. To ascertain similarity between the at least one event and the one or more events, the retrained second machine learning model is configured to compare current values of the plurality of performance parameters from at least the third PLC with one or more patterns learned from the plurality of performance parameters of the second PLC. In one example, the retrained second machine learning model is configured to use techniques such as feature extraction and pattern recognition to identify matching sequences of operations and performance parameters. For example, a support vector machine (SVM) model may map the current operational data into a high-dimensional space and determine whether it falls within the decision boundary that separates normal operations from anomalies.

By continuously monitoring the plurality of performance parameters of at least the third PLC, the retrained second Machine Learning model is enabled to detect deviations that resemble the learned patterns associated with the one or more events. When the second machine learning model identifies such deviations, the second machine learning model predicts a future occurrence of the at least one event in at least the third PLC. Thus, at least the third PLC is enabled to take preemptive actions, such as adjusting control variables, issuing alerts, or initiating maintenance routines, to mitigate the impact of the predicted at least one event.

The deployment of the retrained second Machine Learning model into the third PLC ensures that the entire PLC network benefits from the continuous learning and optimization processes.

By sharing updated models across the PLC network, the plurality of PLCs can collaboratively enhance their performance, reliability, and safety. Thus, the PLC network remains robust and adaptive, capable of operating effectively in demanding industrial environments where continuous internet connectivity and human oversight may not be feasible.

The method further comprises selecting an action plan from a plurality of action plans based on the prediction of the future occurrence of the at least one event in the third PLC. The plurality of action plans are predefined sets of corrective measures and procedures designed to address specific events and anomalies detected by the plurality of machine learning models. The plurality of action plans ensure that the PLC network can respond promptly and effectively to maintain optimal performance and safety.

Examples of the plurality of action plans include reducing a load on the plurality of PLCs to prevent overheating, initiating a controlled shutdown to avoid damage during power surges, triggering maintenance routines to address wear and tear, and reconfiguring communication settings to resolve network issues. Each action plan of the plurality of actions plans is tailored to address a particular type of event, ensuring that the response is appropriate and effective.

The plurality of action plans is represented as structured sequences of commands and conditions that the plurality of PLCs can execute autonomously. The sequences of commands may be encoded in formats such as XML, JSON, or proprietary configuration files that detail the steps to be taken, conditions under which each step is executed, and expected outcomes. For example, an action plan to address overheating might include commands to reduce processing speed, activate cooling systems, and send alerts to maintenance personnel.

When an action plan is executed in a PLC of the plurality of PLCs, the PLC follows the predefined sequence of commands, implementing one or more corrective measures specified in the action plan. The execution of an action plan may involve interacting with hardware components, adjusting software configurations, and communicating with other PLCs or external systems. The PLC monitors outcomes of each step to ensure that the one or more corrective measures are effective and that predicted at least one the event is prevented.

The selection of the action plan is based on the prediction of the future occurrence of at least one event in at least the third PLC. The automation module is configured to analyze the predicted at least one event and matches the predicted at least one event to a most appropriate action plan from the plurality of action plans. A selection process involves evaluating one or more conditions and parameters associated with the predicted at least one event and choosing the action plan that best addresses the one or more conditions. For instance, if the predicted at least one event is an overheating scenario, the automation module is configured to select an action plan specifically designed to mitigate overheating.

Advantageously, by selecting and executing the appropriate action plan, the automation module ensures that at least the third PLC is enabled to respond effectively to the predicted at least one events. Thus, the automation module is enabled to minimize disruptions and maintain operational integrity. An ability to autonomously select and implement action plans enhances a resilience and adaptability of the PLC network, making it well-suited for deployment in demanding industrial environments where rapid and reliable responses to anomalies are critical.

The method further comprises selecting, by at least the third PLC, a fail-safe logic from a plurality of fail-safe logics based on a prediction of the future occurrence of the at least one event in at least the third PLC. The selected fail-safe logic is configured to minimize one or more effects of an occurrence of the at least one event in at least the third PLC.

The plurality of fail-safe logics are predefined safety protocols designed to ensure that the at least one PLC can continue to operate safely or transition to a safe state when an event occurs. The one or more effects that fail-safe logics aim to minimize include equipment damage, safety hazards to personnel, operational downtime, and disruptions to the industrial process. For example, in an industrial setting, an effect such as overheating of machinery can lead to severe damage to the machinery if not promptly addressed. Similarly, a power surge can result in electrical failures and pose serious safety risks to workers.

Failing to address the one or more effects in time can result in catastrophic consequences. For instance, unchecked overheating can cause permanent damage to machinery, leading to costly repairs and extended downtime. Moreover, safety hazards such as electrical failures can jeopardize the lives of personnel, leading to potential injuries or fatalities. Operational downtime can disrupt the entire production line, resulting in significant financial losses and delays in meeting production targets.

An example of how the fail-safe logic can help involves a specific effect such as a sudden power surge. When the deployed second machine learning model predicts a future occurrence of a power surge, the selected fail-safe logic may involve activating redundancy systems that provide an alternate power supply. Thus, execution of the fail-safe logic ensures that critical operations of at least the PLC are maintained without interruption, thereby preventing electrical failures and safeguarding equipment and personnel. By employing the fail-safe logic, at least the third PLC minimizes a risk of damage and ensures a continuity of operations, thereby enhancing an overall reliability and safety of industrial process.

The plurality of fail-safe logics are predefined safety protocols designed to ensure that the plurality of PLCs can continue to operate safely or transition to a safe state when an event occurs. The plurality of fail-safe logics are critical for preventing damage to equipment, ensuring a safety of personnel, and maintaining the integrity of an industrial process. Examples of the plurality of fail-safe logics include emergency shutdown procedures, redundancy activation, load shedding, and system isolation.

The plurality of fail-safe logics are represented as structured sequences of conditions and actions encoded in formats such as XML, JSON, or proprietary configuration files. Each fail-safe logic outlines the specific conditions under which the fail-safe logic should be activated and corresponding actions to be taken. For instance, a fail-safe logic for an emergency shutdown might include conditions such as detecting a critical temperature threshold and actions such as stopping all processes, disconnecting power sources, and triggering alarms.

When a fail-safe logic is executed in at least the third PLC, at least the third PLC follows a predefined sequence of actions to transition to a safe state or mitigate the one or more effects of the at least one event. Execution of the fail-safe logic may involve stopping or slowing down processes, activating backup systems, isolating faulty components, and notifying operators. For example, if a fail-safe logic for load shedding is executed, at least the third PLC may reduce the power consumption of non-essential systems to prevent an overload.

The selection of a fail-safe logic is based on a prediction of the future occurrence of at least one event in at least the third PLC. The automation module is configured to identify the predicted at least one event using the second machine learning model and match the at least one event to a most appropriate fail-safe logic from the plurality of fail-safe logics. Thus, a selection process involves evaluating a severity and nature of the predicted at least one event and choosing a fail-safe logic that best minimizes the one or more effects of the at least one event. For instance, if the predicted at least one event is a critical overheating scenario, the automation module is configured to select the fail-safe logic specifically designed to initiate an emergency shutdown to prevent damage.

By selecting and executing the appropriate fail-safe logic, the automation module ensures that at least the third PLC can respond effectively to predicted events, minimizing potential harm and maintaining operational safety. An ability to autonomously select and implement fail-safe logics enhances the resilience and reliability of the PLC network, thereby making the PLC network optimal for deployment in demanding industrial environments where safety is paramount.

The method of selecting a fail-safe logic from a plurality of fail-safe logics based on the prediction of future events ensures that the PLC network is enabled to maintain optimal safety and performance. Thus, a robust solution for managing industrial processes is provided, allowing the plurality of PLCs to operate autonomously and safely even in absence of continuous internet connectivity and human oversight. Implementation of the plurality of fail-safe logics is critical for protecting both equipment and personnel, ensuring that the PLC network can withstand and recover from unexpected events effectively.

The method further comprises executing the action plan in the at least third PLC to prevent the occurrence of the at least one event before the occurrence of the at least one event. When the selected action plan is executed, at least the third PLC follows the predefined sequence of commands and conditions specified in the action plan to implement corrective measures and mitigate the risk of the predicted event.

For example, if the predicted event is an overheating scenario, the action plan may include steps such as reducing the processing speed, activating cooling systems, and sending alerts to maintenance personnel. By executing these steps, at least the third PLC can lower a temperature and prevent the overheating event from occurring. In another scenario, if the predicted event is a communication failure, the action plan involves reconfiguring network settings, switching to backup communication channels, and logging the issue for further analysis.

When the action plan is executed, at least the third PLC continuously monitors outcomes of executing the action plan to ensure that the one or more corrective measures are effective. At least the third PLC adjusts operations in real-time based on a feedback received from sensors and other monitoring systems. Thus, at least the third PLC is enabled to have a dynamic response which allows at least the third PLC to address potential issues promptly and maintain optimal performance.

However, in some scenarios, the occurrence of the at least one event may not be entirely preventable despite executing the action plan. For instance, if the predicted event is a sudden and severe power surge, the action plan may include one or more corrective measures such as activating surge protectors and shutting down non-essential systems. While the one or more corrective measures can mitigate an impact of power surge, the one or more corrective measures may not completely prevent the at least one event from affecting the PLC's operations.

In such cases, the automation module is configured to initiate the selected fail-safe logic to protect both the equipment and personnel from potential harm. By combining a first corrective action liked to the selected action plan with a second corrective action linked to the selected fail-safe logic, the plurality of PLCs are enabled to effectively manage a wide range of events, ensuring that the PLC network remains resilient and secure even under adverse conditions.

Thus, as stated, in a case where the occurrence of the at least one event is not prevented by the selected action plan, the method further comprises initiating, by at least the third PLC, an execution of the fail-safe logic in the at least the third PLC to minimize the one or more effects of the at least one event. The execution of the fail-safe logic is execcuted after an occurrence of the at least one event in at least the third PLC. When the fail-safe logic is executed, at least the third PLC follows a predefined sequence of safety protocols designed to transition at least the third PLC to a safe state or mitigate the one or more effects of the one or more events.

For example, if the at least one event is an overheating incident that was not entirely prevented by the action plan, the fail-safe logic includes steps such as immediately shutting down the affected systems, activating emergency cooling mechanisms, and sending emergency alerts to operators and maintenance personnel. The selected fail-safe logic ensures that overheating does not escalate into a more severe issue, such as hardware damage or fire hazards.

In another scenario, if the at least one event is a power surge that was not fully mitigated by the action plan, the fail-safe logic might involve isolating affected components from rest of an industrial system, triggering backup power supplies, and logging detailed diagnostic information for later analysis. By executing these steps, at least the third PLC is enabled to protect critical infrastructure and maintain limited functionality until issue is resolved.

When the fail-safe logic is executed, the automation module is configured to continuously monitor a status of at least the third PLC and adjusts actions as necessary to maintain safety and stability. The fail-safe logic may include feedback loops that allow at least the third PLC to reassess the one or more effects in real-time and implement additional corrective measures if needed. For instance, if an initial shutdown of non-essential systems does not stabilize the one or more effects, the fail-safe logic might escalate to a full system shutdown to ensure maximum protection.

Initiating the execution of the fail-safe logic in at least the third PLC minimizes the one or more effects of the at least one event ensures that the plurality of PLCs can effectively manage and recover from adverse conditions. The fail-safe logic provides a comprehensive solution for safeguarding industrial processes, allowing the plurality of PLCs to operate autonomously and securely even in face of unforeseen events. The combination of action plans and fail-safe logics enhances an overall reliability and resilience of the PLC network, making the PLC network well-suited for deployment in demanding industrial environments where safety and continuous operation are paramount.

In a scenario where the at least one event is predicted to occur in at least the third PLC, the fail-safe logic is selected by at least one PLC of the plurality of PLCs to ensure a coordinated response. For instance, the first PLC may detect an impending power surge in at least the third PLC based on the periodically received data package and one or more predictions of the retrained second Machine Learning model. In such a scenario, the first PLC selects a fail-safe logic designed to mitigate the aftereffects of the power surge.

When the fail-safe logic is executed by the first PLC, the actions taken aim to minimize the one or more effects of the power surge in at least the third PLC. The one or more effects of a power surge can include hardware damage, data corruption, system downtime, and potential safety hazards. For example, the fail-safe logic might involve the first PLC initiating a sequence of actions that include sending commands to the third PLC to immediately disconnect non-essential systems from the main power supply. The first PLC may also activate surge protectors and voltage regulators to shield critical components from the sudden influx of power. Additionally, the first PLC may redirect excess power to backup systems or energy storage devices to prevent overload. Issuing alerts to operators and maintenance teams to inform them of the situation.

By executing the fail-safe logic, the first PLC helps to ensure that at least the third PLC can withstand the power surge with minimal damage. The execution of the fail-safe logic helps prevent hardware damage by isolating vulnerable components and protecting critical infrastructure. Data corruption is mitigated by ensuring that essential systems are either shut down in a controlled manner or protected by surge protectors. System downtime is minimized by redirecting power to backup systems, allowing the third PLC to maintain some level of operational functionality. Safety hazards are addressed by issuing alerts and taking preemptive measures to protect both the equipment and the personnel involved.

The coordinated execution of the fail-safe logic by the first PLC demonstrates resilience and adaptability of the PLC network. By having the plurality of PLCs work together to address predicted events, the automation module ensures that each PLC of the plurality of PLCs can benefit from collective intelligence and resources of the PLC network. This approach enhances an overall reliability and safety of the industrial process, making it well-suited for deployment in environments where rapid and effective responses to anomalies are critical.

The method of selecting and executing a fail-safe logic by at least one PLC in response to a predicted event in another PLC ensures that the automation module can manage and mitigate effects of adverse events effectively. By having robust fail-safe logics in place, the automation module can maintain operational integrity and safety, even in face of unforeseen challenges. A combination of predictive capabilities, action plans, and fail-safe logics provides a comprehensive solution for safeguarding industrial processes and ensuring continuous and reliable operation.

In other words, the retrained second machine learning model enables at least the third PLC to execute a corrective action in at least the third PLC based on the prediction of the future occurrence of the at least one event. The corrective action is at least one of executing the selected action plan or executing the selected fail-safe logic.

The steps of the method claimed in the present invention can be performed by any PLC of the plurality of PLCs on any other PLC within the network. Thus, the PLC network is highly adaptable and can efficiently manage and optimize operations across the PLC network. For instance, a second PLC can apply a machine learning model to monitor and analyze the performance parameters of a third PLC, identify anomalies, and take corrective actions. Additionally, the same PLC can perform all the steps on itself, autonomously monitoring its own performance, detecting deviations, retraining its machine learning model, and implementing action plans and fail-safe logics as needed. This capability enhances the robustness and resilience of the PLC network, ensuring that each PLC can independently maintain optimal performance and safety, even in the absence of external network connectivity or human oversight.

The automation module integrated within each PLC offers numerous advantages that significantly enhance an operational efficiency, reliability, and safety of industrial processes controlled by the plurality of PLCs. One of the primary benefits is a capability for real-time monitoring and anomaly detection. By leveraging the plurality of machine learning models, the automation module can continuously observe performance parameters and detect deviations from normal operating conditions. Early identification of potential issues allows for timely interventions, thereby reducing downtime and preventing costly equipment failures. Financially, the automation module generates substantial savings in maintenance costs and minimizes production losses due to unplanned outages. Additionally, an ability to autonomously manage operations without need for continuous external supervision reduces labor costs and enhances overall productivity.

Environmentally, the automation module contributes to sustainable industrial practices by optimizing energy consumption and reducing waste. The plurality of machine learning models, which are TinyML models, are designed to operate with minimal computational resources, leading to lower power consumption. By continuously monitoring and adjusting operational parameters, the automation module ensures that the plurality of PLCs operate within optimal efficiency ranges, thereby conserving energy. Furthermore, early detection of anomalies and prompt corrective actions help prevent catastrophic failures that could lead to environmental hazards, such as chemical spills or emissions. s

In harsh industrial environments where human oversight is limited or impractical, the automation module ensures an operational integrity of the plurality of PLCs. By autonomously retraining machine learning models based on real-time data, the PLC network remains adaptive and resilient, capable of responding to dynamic conditions and emerging threats. A continuous learning and optimization process enhances a reliability and longevity of equipment in an industrial plant, thereby extending an operational life and maximizing return on investment. Financially, the reduced need for frequent manual interventions and lower failure rates contribute to significant cost savings. Environmentally, optimized operations lead to reduced resource consumption and minimized environmental impact. Overall, the automation module provides a comprehensive solution that addresses both financial and environmental concerns, ensuring the sustainable and efficient operation of industrial processes.

The object of the present disclosure is achieved through a system for managing events in a plurality of PLCs. The system comprises a plurality of PLCs, including a first PLC, a second PLC, and at least a third PLC, configured to collaborate in monitoring and managing events autonomously. Specifically, the second PLC is configured to periodically send a data package to the first PLC, where the data package comprises information used by a first machine learning model to identify the occurrence of one or more events in the second PLC. The first machine learning model, hosted in the second PLC, applies its algorithms to a plurality of performance parameters to detect these events.

The first PLC, upon receiving the data package, is configured to retrain a second machine learning model by applying a learning algorithm on the received data package, with the retraining process executed within the first PLC. This retrained second machine learning model is then deployable into at least the third PLC. The deployment ensures that the third PLC can utilize the retrained second machine learning model to predict the occurrence of at least one event in its operations. Based on this prediction, the third PLC can execute one or more corrective actions, thereby effectively managing the events within the entire PLC network.

Additionally, the third PLC is configured to select an action plan from a plurality of predefined action plans based on the prediction of the at least one event. By executing the selected action plan, the third PLC can prevent the occurrence of the predicted event before it manifests. The data package sent from the second PLC to the first PLC also includes information on a first sequence of operations performed by the second PLC before the occurrence of the detected events. This information allows the retrained second machine learning model to detect a similar sequence of operations in the third PLC, ensuring that it can proactively manage similar events. The object of the present invention is also achieved by a computer-program product, having machine-readable instructions stored therein, that when executed by a processing unit is configured to perform the above-described method steps.

The object of the present disclosure is achieved through a first PLC, which is specifically designed to manage events in a plurality of PLCs. The first PLC includes a processing unit configured to periodically receive a data package from a second PLC. This data package comprises information used by a first machine learning model to identify the occurrence of one or more events in the second PLC, with the first machine learning model hosted in the second PLC. The information in the data package includes critical performance parameters that the first machine learning model uses to detect these events.

Equipped with this data package, the first PLC's processing unit is configured to retrain a second machine learning model by applying a learning algorithm on the received data package. This retraining process is executed within the first PLC itself, ensuring that the second machine learning model is updated with the latest operational data. Once retrained, the second machine learning model is utilized by the first PLC to predict the occurrence of at least one event within its own operations. The processing unit can then execute one or more corrective actions based on this prediction, effectively managing the predicted event within the entire network of PLCs.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a block diagram of a system configured to manage events in a plurality of Programmable logic controllers (PLC), according to an embodiment of the present invention;
- FIG 2: is a block diagram of a PLC, such as those shown in FIG. 1, in which an embodiment of the present invention can be implemented;
- FIG 3: is a block diagram of an automation module, such as those shown in FIG 2, in which an embodiment of the present invention can be implemented; and
- FIG 4: is a process flowchart illustrating an exemplary method of managing events in a plurality of PLCs, according to an embodiment of the present invention.

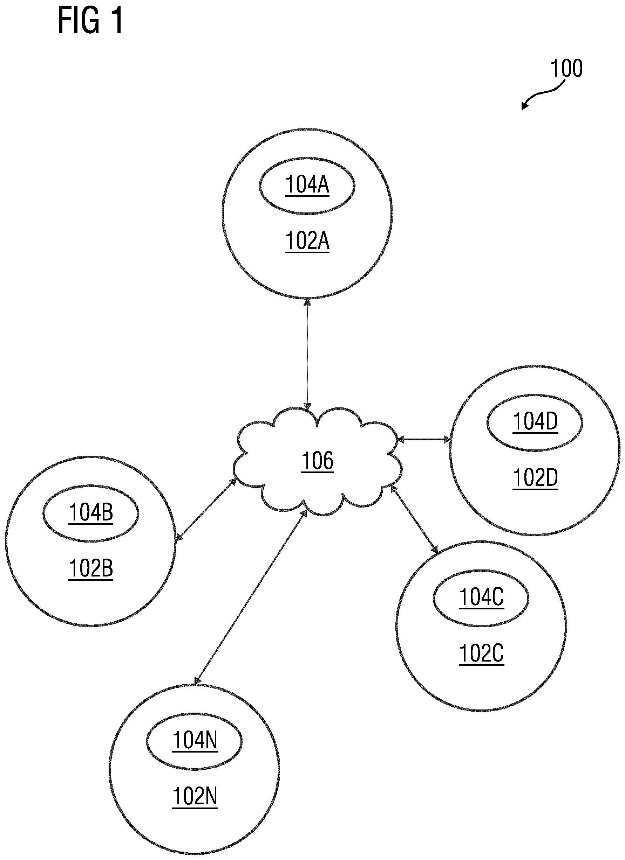

FIG 1 is a block diagram of a system 100 configured to manage events in a plurality of Programmable Logic Controllers (PLCs) 102A-N, according to an embodiment of the present invention. The plurality of PLCs 102A-N are specialized computing devices used to control various industrial processes and machinery. The plurality of PLCs 102A-N comprises a first PLC 102A, a second PLC 102B, and at least a third PLC 102C. The plurality of PLCs 102A-N is isolated from the internet. The plurality of PLCs 102A-N further comprises the fourth PLC 102D and the fifth PLC 102N. The plurality of PLCs 102A-N are connected to each other via the PLC network 106. The plurality of PLCs 102A-N may include more than five PLCs, making the PLC network 106 scalable for larger industrial applications. Examples of functions performed by the plurality of PLCs 102A-N include automating car doors, managing conveyor belts in manufacturing plants, and controlling the operation of wind turbines. The types of PLCs in the plurality of PLCs 102A-N range from standard PLCs to specialized SIPLUS PLCs designed to withstand harsh environmental conditions.

The system 100 comprises a network of interconnected PLCs working collaboratively to monitor, analyze, and manage events autonomously. An exemplary implementation of the system 100 involves use of the system 100 in an industrial plant where continuous and reliable operation of machinery is critical. Industrial plants can include manufacturing facilities, power generation stations, and chemical processing units. Examples of harsh environments where the system 100 may be implemented are marine settings, underground coal mines, high-altitude wind turbines, and rail routes. In such environments, the PLCs may not have access to a continuous internet connection, necessitating the need for autonomous operation and on-device computation.

The plurality of machine learning models 104A-N hosted by the plurality of PLCs 102A-N play a crucial role in ensuring the system's efficiency and reliability. The plurality of machine learning models 104A-N comprises TinyML models, which are optimized for low-power devices and designed to perform on-device inference with minimal computational resources. TinyML models offer several benefits, including low latency, reduced power consumption, enhanced security, and the ability to operate without continuous internet connectivity. The second PLC 102B comprises a first machine learning model 104A. The first PLC 102A and at least the third PLC 102C has a second machine learning model 104B.

Each machine learning model in the plurality of machine learning models 104A-N is hosted by a specific PLC of the plurality of PLCs 102A-N and is configured to perform specific tasks within the respective PLC. For example, a machine learning model in a PLC monitors performance parameters such as temperature, power consumption, and communication load to detect anomalies. Once an anomaly is detected, the machine learning model in the PLC sends a data package to another PLC for further analysis and retraining of another machine learning model.

The PLC network 106 serves as the communication framework that allows the plurality of PLCs 102A-N to exchange data and coordinate operations. Examples of implementation of the PLC network 106 include automated manufacturing lines where a set of PLCs control different segments of a production process. The methods used for communication within the PLC network 106 include various protocols such as Modbus, Profibus, EtherNet/IP, and Profinet. Both wired connections, like Ethernet or serial cables, and wireless connections, such as Wi-Fi or Bluetooth, can be employed to facilitate data exchange between the PLCs, providing flexibility and reliability in diverse industrial environments.

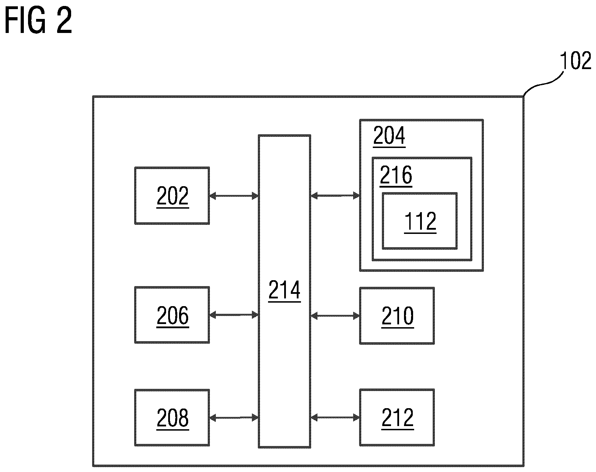

FIG 2 is a block diagram of a programmable logic controller (PLC) 102 of the plurality of PLCs 102A-N, such as those shown in FIG 1, in which an embodiment of the present invention can be implemented. In FIG 2, the PLC 102 includes a processing unit 202, an accessible memory 204, a storage unit 206, a communication interface 208, an input-output unit 210, a network interface 212 and a bus 214.

The processing unit 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processing unit 202 may also include embedded controllers, such as generic or programmable logic devices or arrays, application specific integrated circuits, single-chip computers, and the like.

The memory 204 may be non-transitory volatile memory and non-volatile memory. The memory 204 may be coupled for communication with the processing unit 202, such as being a computer-readable storage medium. The processing unit 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes an network module 216. The network module 216 includes an automation module 112 stored in the form of machine-readable instructions on any of the above-mentioned storage media and may be in communication with and executed by the processor(s) 202.

Thus, each PLC of the plurality of PLCs 102A-N comprises the automation module 112 and the processing unit 202. The automation module 112 comprises computer-readable code that can be executed by the processing unit 202 to manage events in the plurality of PLCs 102A-N. The automation module 112 is a software component designed to manage and control various functions and processes within each PLC of the plurality of PLCs 102A-N. The automation module 112 interfaces with hardware components of the PLC 102, such as sensors, actuators, and communication interfaces 208, to execute control algorithms, monitor system performance, and respond to operational events.

The automation module 112 within each PLC is responsible for executing one or more of the plurality of machine learning models 104A-N, and performing tasks such as data collection, real-time monitoring, and anomaly detection. The automation module 112 ensures that each PLC can autonomously manage operations, adapt to changing conditions, and maintain optimal performance without the need for continuous external supervision.

The automation module 112 addresses challenges posed by harsh environments and the lack of internet connectivity. By executing a retraining process within any one PLC of the plurality of PLCs 102A-N in the PLC network 106, the automation module 112 ensures that the plurality of machine learning models 104A-N can be updated and optimized in real-time, without the need for external network resources. Thus, the reliability and performance of the plurality of PLCs 102A-N is enhanced, ensuring that the plurality of PLCs 102A-N continue to operate safely and efficiently in demanding conditions. The plurality of PLCs 102A-N communicate with each other via the PLC network 106.

It is noted that each PLC of the plurality of PLCs 102A-N hosts a machine learning model of the plurality of machine learning models 104A-N. Each machine learning model hosted within each PLC is configured to monitor the plurality of performance parameters of the PLC dynamically. In one example, the machine learning model is a TinyML model, which is a compact and efficient form of machine learning designed for edge devices with limited computational resources. The plurality of performance parameters associated with the PLC includes various metrics that indicate the operational status and health of the PLC. Examples of the plurality of performance parameters are temperature, power consumption, communication load, error rates, and processing speed.

Normal operating conditions for a PLC are defined by a range of expected values for each performance parameter. For instance, the first performance parameter, the normal temperature, might range between 20 to 70 degrees Celsius; the second performance parameter, the normal power consumption, might range from 50 to 150 watts; and the third performance parameter, the normal communication load, might range from 10 to 50 percent of network capacity. Error rates should remain below 0.1 percent, and processing speed should be within 80 to 100 percent of the PLC's rated capacity.

The machine learning model continuously monitors the plurality of performance parameters to detect any deviations from the established normal operating conditions. For example, the machine learning model may use an anomaly detection algorithm, such as Isolation Forest, to identify unusual patterns in the plurality of performance parameters. Isolation Forest works by creating a forest of random trees and isolating anomalies based on the path length from the root to the leaf node. Shorter paths indicate anomalies, while longer paths represent normal data points.

Suppose the temperature of a specific PLC suddenly rises to 85 degrees Celsius, the power consumption spikes to 180 watts, and the communication load increases to 70 percent. In such a case, the machine learning model is configured to recognize such values as deviations from the normal operating conditions. The anomaly detection algorithm within the machine learning model would isolate data points as anomalies due to significant deviation from the expected ranges.

The machine learning model is further configured to determine the occurrence of a plurality of events in the specific PLC. The plurality of events refers to significant incidents or anomalies that may impact the performance or safety of the PLC. Examples of the plurality of events include overheating, unexpected power surges, communication failures, abnormal error rates, and deviations in processing speed.

The machine learning model determines the occurrence of the plurality of events by analyzing real-time data collected from the plurality of performance parameters. The machine learning model utilizes one or more algorithms to identify patterns and correlations within the plurality of performance parameters of the PLC. When the machine learning model detects deviations that match known patterns of anomalies or predict potential issues, the machine learning model flags the detected deviations as events.

By dynamically monitoring the plurality of performance parameters and predicting the occurrence of the plurality of events, the machine learning model ensures that the PLC operates within safe and optimal conditions. The machine learning model identifies and predicts anomalies, thereby allowing for timely interventions, preventing potential failures, and ensuring the reliability and efficiency of the PLC. Autonomous monitoring and decision-making capability is crucial for maintaining the operational integrity of PLCs, especially in environments where human oversight is limited or impractical.

The automation module 112 further causes the processing unit 202 to apply the first machine learning model 104A on the plurality of performance parameters of the second PLC 102B. The first machine learning model 104A is hosted in the second PLC 102B. An example of the first machine learning model 104A is a decision tree model designed to classify different states of the second PLC 102B based on the plurality of performance parameters. The decision tree model uses thresholds and rules to determine whether the second PLC 102B is operating normally or if one or more events are occurring. For instance, if a temperature sensor reading exceeds a predefined threshold while power consumption spikes simultaneously, the decision tree model may classify this as an overheating event.

Another type of the first machine learning model 104A is a support vector machine (SVM) model. The SVM model can be trained to identify patterns in the plurality of performance parameters that indicate potential events. By mapping the plurality of performance parameters into a high-dimensional space, the SVM model creates a decision boundary that separates normal operating conditions from anomalies.

The automation module 112 further causes the processing unit 202 to determine the occurrence of one or more events in the second PLC 102B based on the application of the first TinyML model on the plurality of performance parameters of the second PLC 102B. The one or more events refer to specific incidents or anomalies that may affect the operation of the second PLC 102B. Examples of the one or more events include overheating, unexpected power surges, communication failures, abnormal error rates, and deviations in processing speed of the second PLC 102B. By identifying these events, the automation module 112 is enabled to implement corrective actions to address the root causes of the one or more events.

Advantages of determining the one or more events are significant for maintaining the operational integrity and efficiency of the second PLC 102B. By identifying the one or more events early, the automation module 112 is enabled to take proactive measures to prevent potential failures, reduce downtime, and ensure the safety of equipment and personnel. Timely detection of events allows for immediate intervention, which can mitigate the impact of anomalies and optimize the overall performance of the second PLC 102B.

The automation module 112 further causes the processing unit 202 to periodically send a data package to the first PLC 102A. The data package comprises information used by the first machine learning model 104A to identify the occurrence of one or more events in the second PLC 102B. The data package is a structured set of data that encapsulates necessary information for analysis and decision-making. The data package comprises at least a collected set of performance parameters, timestamps, sensor readings, and metadata that describe the operational context of the second PLC 102B, and historical event logs. Additional contents of the data package include configuration settings, system diagnostics, error messages, and any alerts that have been triggered within the second PLC 102B. An example of a data structure used to represent the data package is a JSON object or a binary format that includes fields for each type of performance parameter, such as temperature, power consumption, communication load, error rates, processing speed, and event history.

The information used by the first machine learning model 104A refers to a plurality of patterns and correlations within the plurality of performance parameters that the first machine learning model 104A has utilized to identify the occurrence of the one or more events. For instance, the first machine learning model 104A may be configured to recognize specific combinations of temperature spikes and increased power consumption as indicative of an overheating event. The patterns in the plurality of performance parameters are critical for the first machine learning model 104A to make accurate predictions and classifications.

By periodically sending the data package from the second PLC 102B to the first PLC 102A, the automation module 112 ensures that the first PLC 102A receives up-to-date information about the operational status of the second PLC 102B. The data package enables the first PLC 102A to retrain one or more machine learning models based on the latest patterns and trends observed in the second PLC 102B. The continuous exchange of data packages allows the PLC network 106 to maintain optimal performance and quickly adapt to any changes or anomalies that may arise.

In one example, the data package comprises information on a first sequence of operations performed in the second PLC 102B before the occurrence of the one or more events. The first sequence of operations refers to one or more specific actions and processes executed by the second PLC 102B leading up to the detected one or more events. Examples of the first sequence of operations include the activation of specific actuators, the adjustment of one or more control variables, the execution of maintenance routines, and interactions with other PLCs or systems within the PLC network 106.

Including the first sequence of operations in the data package is crucial for several reasons. For example, the first sequence of operations provides a contextual understanding of the one or more events, allowing the plurality of machine learning models 104A-N to identify patterns and correlations between operations and subsequent events. For example, if the second PLC 102B consistently performs a series of operations that lead to an overheating event, the first machine learning model 104A can learn to recognize patterns and predict future occurrences. By periodically sending the data package from the second PLC 102B to the first PLC 102A, which includes the first sequence of operations, the automation module 112 ensures that the first PLC 102A has comprehensive and up-to-date information about the operational status of the second PLC 102B.

The automation module 112 further causes the processing unit 202 to periodically receive the data package from the second PLC 102B. The automation module 112 further causes the processing unit 202 to retrain the second machine learning model 104B by applying a learning algorithm on the received data package. The retraining of the second machine learning model 104B is executed within the first PLC 102A. A retraining process involves updating one or more parameters of the second machine learning model 104B based on new data contained in the data package received from the second PLC 102B. The retraining process ensures that the second machine learning model 104B remains accurate and effective in identifying and predicting the one or more events.

Examples of the learning algorithms used to retrain the second machine learning model 104B include a gradient descent algorithm, a stochastic gradient descent algorithm, and a reinforcement learning algorithm. In the case where the second machine learning model 104B is a decision tree model, the learning algorithm involves recursively partitioning the new data based on attribute values to create a more refined tree. For a support vector machine (SVM) model, the learning algorithm includes updating a hyperplane that separates different classes based on new data points in the data package.

Retraining the second machine learning model 104B within the first PLC 102A offers several advantages. For example, executing the retraining process locally within the first PLC 102A eliminates the need for continuous internet connectivity for the plurality of PLCs 102A-N. Thus, the retraining process can be executed in the plurality of PLCs 102A-N which are deployed in harsh environments that lack continuous internet connectivity, even in the absence of external network resources.

Furthermore, local retraining enhances the security of the PLC network 106 by avoiding the transmission of sensitive data to external cloud servers. Moreover, local retraining reduces latency. Thus, the second machine learning model 104B is updated as soon as the first PLC 102A receives the data package, without waiting for data to be transmitted to and from a central server. Thus, the PLC network 106 is enabled to quickly adapt to new conditions and respond to events as they occur.

The automation module 112 further causes the processing unit 202 to deploy the retrained second machine learning model 104B into at least the third PLC 102C. The deployment process involves transferring the updated model parameters and structure from the first PLC 102A to at least the third PLC 102C. Examples of deployment include using secure communication protocols such as MQTT or HTTPS to ensure the integrity and confidentiality of the second machine learning model 104B during transfer. Once transferred, at least the third PLC 102C integrates the retrained second machine learning model 104B into the operational framework of at least the third PLC 102C.

It is noted that the data package comprises information about the first sequence of operations performed in the second PLC 102B before the occurrence of the one or more events. In one example, the deployed second machine learning model 104B is configured to detect a second sequence of operations in at least the third PLC 102C. The second sequence of operations is similar to the first sequence of operations. The relevance of detecting the second sequence of operations lies in the ability to identify recurring patterns and predict potential events before such events escalate into significant issues.

The second sequence of operations refers to a specific series of actions and processes executed by at least the third PLC 102C. The second sequence of operations closely resembles those observed in the first sequence of operations within the second PLC 102B. By recognizing the similarity between the first and second sequence of operations, the retrained second machine learning model 104B is enabled to proactively identify conditions that may lead to the occurrence of one or more events, such as overheating, unexpected power surges, or communication failures in at least the third PLC 102C.

Advantageously, detection of the second sequence of operations allows for early intervention of potential events. By identifying similar operational patterns, the automation module 112 is enabled to take corrective actions before any detrimental events occur, thereby minimizing the downtime of at least the third PLC 102C and ensuring continuous operation of the PLC network 106.

Furthermore, the ability to detect similar sequences of operations across the plurality of PLCs 102A-N within the PLC network 106 ensures a cohesive and coordinated response to potential issues. When the retrained second machine learning model 104B identifies the second sequence of operations in at least the third PLC 102C, the automation module 112 is enabled to implement standardized protocols and procedures. Thus, the overall efficiency and effectiveness of the PLC network 106 is increased.

The deployed second machine learning model 104B is utilizable by at least the third PLC 102C to predict the future occurrence of at least one event in at least the third PLC 102C. The retrained second machine learning model 104B leverages a set of patterns and correlations learned during the retraining process, including the first sequence of operations, to make an accurate prediction of the future occurrence of at least one event. For instance, if the second machine learning model 104B has identified that a specific combination of rising temperature and increased power consumption in the second PLC 102B led to an overheating event, the second machine learning model 104B is configured to detect similar patterns in the plurality of performance parameters of at least the third PLC 102C to predict the future occurrence of at least one event in at least the third PLC 102C.

The at least one event is similar to the one or more events. To ascertain similarity between the at least one event and the one or more events, the retrained second machine learning model 104B is configured to compare current values of the plurality of performance parameters from at least the third PLC 102C with one or more patterns learned from the plurality of performance parameters of the second PLC 102B. In one example, the retrained second machine learning model 104B is configured to use techniques such as feature extraction and pattern recognition to identify matching sequences of operations and performance parameters. For example, a support vector machine (SVM) model may map the current operational data into a high-dimensional space and determine whether it falls within the decision boundary that separates normal operations from anomalies.

By continuously monitoring the plurality of performance parameters of at least the third PLC 102C, the retrained second machine learning model 104B is enabled to detect deviations that resemble the learned patterns associated with the one or more events. When the second machine learning model 104B identifies such deviations, the second machine learning model 104B predicts the future occurrence of the at least one event in at least the third PLC 102C. Thus, at least the third PLC 102C is enabled to take preemptive actions, such as adjusting control variables, issuing alerts, or initiating maintenance routines, to mitigate the impact of the predicted at least one event.

The deployment of the retrained second machine learning model 104B into the third PLC 102C ensures that the entire PLC network 106 benefits from the continuous learning and optimization processes. By sharing updated models across the PLC network 106, the plurality of PLCs 102AN can collaboratively enhance their performance, reliability, and safety. Thus, the PLC network 106 remains robust and adaptive, capable of operating effectively in demanding industrial environments where continuous internet connectivity and human oversight may not be feasible.

The automation module 112 further causes the processing unit 202 to select an action plan from the plurality of action plans based on the prediction of the future occurrence of the at least one event in the third PLC 102C. The plurality of action plans are predefined sets of corrective measures and procedures designed to address specific events and anomalies detected by the plurality of machine learning models 104A-N. The plurality of action plans ensure that the PLC network 106 can respond promptly and effectively to maintain optimal performance and safety.

Examples of the plurality of action plans include reducing a load on the plurality of PLCs 102A-N to prevent overheating, initiating a controlled shutdown to avoid damage during power surges, triggering maintenance routines to address wear and tear, and reconfiguring communication settings to resolve network issues. Each action plan of the plurality of actions plans is tailored to address a particular type of event, ensuring that the response is appropriate and effective.

The plurality of action plans is represented as structured sequences of commands and conditions that the plurality of PLCs 102A-N can execute autonomously. The sequences of commands may be encoded in formats such as XML, JSON, or proprietary configuration files that detail the steps to be taken, conditions under which each step is executed, and expected outcomes. For example, an action plan to address overheating might include commands to reduce processing speed, activate cooling systems, and send alerts to maintenance personnel.

When an action plan is executed in a PLC of the plurality of PLCs 102A-N, the PLC follows the predefined sequence of commands, implementing one or more corrective measures specified in the action plan. The execution of an action plan may involve interacting with hardware components, adjusting software configurations, and communicating with other PLCs or external systems. The PLC monitors the outcomes of each step to ensure that the one or more corrective measures are effective and that the predicted at least one event is prevented.

The selection of the action plan is based on the prediction of the future occurrence of at least one event in at least the third PLC 102C. The automation module 112 is configured to analyze the predicted at least one event and match the predicted at least one event to the most appropriate action plan from the plurality of action plans. The selection process involves evaluating one or more conditions and parameters associated with the predicted at least one event and choosing the action plan that best addresses the one or more conditions. For instance, if the predicted at least one event is an overheating scenario, the automation module 112 selects an action plan specifically designed to mitigate overheating.

Advantageously, by selecting and executing the appropriate action plan, the automation module 112 ensures that at least the third PLC 102C is enabled to respond effectively to the predicted at least one event. Thus, the automation module 112 is enabled to minimize disruptions and maintain operational integrity. The ability to autonomously select and implement action plans enhances the resilience and adaptability of the PLC network 106, making it well-suited for deployment in demanding industrial environments where rapid and reliable responses to anomalies are critical.

The automation module 112 further causes the processing unit 202 to select a fail-safe logic from the plurality of fail-safe logics based on the prediction of the future occurrence of the at least one event in at least the third PLC 102C. The selected fail-safe logic is configured to minimize one or more effects of the occurrence of the at least one event in at least the third PLC 102C.

The plurality of fail-safe logics are predefined safety protocols designed to ensure that the plurality of PLCs 102A-N can continue to operate safely or transition to a safe state when an event occurs. The one or more effects that fail-safe logics aim to minimize include equipment damage, safety hazards to personnel, operational downtime, and disruptions to the industrial process. For example, in an industrial setting, an effect such as overheating of machinery can lead to severe damage to the machinery if not promptly addressed. Similarly, a power surge can result in electrical failures and pose serious safety risks to workers.

Failing to address the one or more effects in time can result in catastrophic consequences. For instance, unchecked overheating can cause permanent damage to machinery, leading to costly repairs and extended downtime. Moreover, safety hazards such as electrical failures can jeopardize the lives of personnel, leading to potential injuries or fatalities. Operational downtime can disrupt the entire production line, resulting in significant financial losses and delays in meeting production targets.

An example of how the fail-safe logic can help involves a specific effect such as a sudden power surge. When the deployed second machine learning model 104B predicts a future occurrence of a power surge, the selected fail-safe logic may involve activating redundancy systems that provide an alternate power supply. Thus, execution of the fail-safe logic ensures that critical operations of at least the third PLC 102C are maintained without interruption, thereby preventing electrical failures and safeguarding equipment and personnel. By employing the fail-safe logic, at least the third PLC 102C minimizes the risk of damage and ensures continuity of operations, thereby enhancing the overall reliability and safety of the industrial process.

The plurality of fail-safe logics are represented as structured sequences of conditions and actions encoded in formats such as XML, JSON, or proprietary configuration files. Each fail-safe logic outlines the specific conditions under which the fail-safe logic should be activated and corresponding actions to be taken. For instance, a fail-safe logic for an emergency shutdown might include conditions such as detecting a critical temperature threshold and actions such as stopping all processes, disconnecting power sources, and triggering alarms.

When a fail-safe logic is executed in at least the third PLC 102C, at least the third PLC 102C follows a predefined sequence of actions to transition to a safe state or mitigate the one or more effects of the at least one event. Execution of the fail-safe logic may involve stopping or slowing down processes, activating backup systems, isolating faulty components, and notifying operators. For example, if a fail-safe logic for load shedding is executed, at least the third PLC 102C may reduce the power consumption of non-essential systems to prevent an overload.

The selection of a fail-safe logic is based on the prediction of the future occurrence of at least one event in at least the third PLC 102C. The automation module 112 is configured to identify the predicted at least one event using the second machine learning model 104B and match the at least one event to the most appropriate fail-safe logic from the plurality of fail-safe logics. Thus, the selection process involves evaluating the severity and nature of the predicted at least one event and choosing a fail-safe logic that best minimizes the one or more effects of the at least one event. For instance, if the predicted at least one event is a critical overheating scenario, the automation module 112 selects the fail-safe logic specifically designed to initiate an emergency shutdown to prevent damage.

By selecting and executing the appropriate fail-safe logic, the automation module 112 ensures that at least the third PLC 102C can respond effectively to predicted events, minimizing potential harm and maintaining operational safety. The ability to autonomously select and implement fail-safe logics enhances the resilience and reliability of the PLC network 106, thereby making the PLC network 106 optimal for deployment in demanding industrial environments where safety is paramount.

The automation module 112 further causes the processing unit 202 to execute the action plan in at least the third PLC 102C to prevent the occurrence of the at least one event before the occurrence of the at least one event. When the selected action plan is executed, at least the third PLC 102C follows the predefined sequence of commands and conditions specified in the action plan to implement corrective measures and mitigate the risk of the predicted event.

For example, if the predicted event is an overheating scenario, the action plan may include steps such as reducing the processing speed, activating cooling systems, and sending alerts to maintenance personnel. By executing these steps, at least the third PLC 102C can lower the temperature and prevent the overheating event from occurring. In another scenario, if the predicted event is a communication failure, the action plan involves reconfiguring network settings, switching to backup communication channels, and logging the issue for further analysis.

When the action plan is executed, at least the third PLC 102C continuously monitors the outcomes of executing the action plan to ensure that the one or more corrective measures are effective. At least the third PLC 102C adjusts operations in real-time based on feedback received from sensors and other monitoring systems. Thus, at least the third PLC 102C is enabled to have a dynamic response which allows at least the third PLC 102C to address potential issues promptly and maintain optimal performance.

However, in some scenarios, the occurrence of the at least one event may not be entirely preventable despite executing the action plan. For instance, if the predicted event is a sudden and severe power surge, the action plan may include one or more corrective measures such as activating surge protectors and shutting down non-essential systems. While the one or more corrective measures can mitigate the impact of the power surge, the one or more corrective measures may not completely prevent the at least one event from affecting the PLC's operations.

In such cases, the automation module 112 is configured to initiate the selected fail-safe logic to protect both the equipment and personnel from potential harm. By combining a first corrective action linked to the selected action plan with a second corrective action linked to the selected fail-safe logic, the plurality of PLCs 102A-N are enabled to effectively manage a wide range of events, ensuring that the PLC network 106 remains resilient and secure even under adverse conditions.

Thus, as stated, in a case where the occurrence of the at least one event is not prevented by the selected action plan, the automation module 112 further causes the processing unit 202 to initiate the execution of the fail-safe logic in at least the third PLC 102C to minimize the one or more effects of the at least one event. The execution of the fail-safe logic is executed after the occurrence of the at least one event in at least the third PLC 102C. When the fail-safe logic is executed, at least the third PLC 102C follows a predefined sequence of safety protocols designed to transition at least the third PLC 102C to a safe state or mitigate the one or more effects of the one or more events.

For example, if the at least one event is an overheating incident that was not entirely prevented by the action plan, the fail-safe logic includes steps such as immediately shutting down the affected systems, activating emergency cooling mechanisms, and sending emergency alerts to operators and maintenance personnel. The selected fail-safe logic ensures that overheating does not escalate into a more severe issue, such as hardware damage or fire hazards.

In another scenario, if the at least one event is a power surge that was not fully mitigated by the action plan, the fail-safe logic might involve isolating affected components from the rest of the industrial system, triggering backup power supplies, and logging detailed diagnostic information for later analysis. By executing these steps, at least the third PLC 102C is enabled to protect critical infrastructure and maintain limited functionality until the issue is resolved.

When the fail-safe logic is executed, the automation module 112 is configured to continuously monitor the status of at least the third PLC 102C and adjust actions as necessary to maintain safety and stability. The fail-safe logic may include feedback loops that allow at least the third PLC 102C to reassess the one or more effects in real-time and implement additional corrective measures if needed. For instance, if an initial shutdown of non-essential systems does not stabilize the one or more effects, the fail-safe logic might escalate to a full system shutdown to ensure maximum protection.

Initiating the execution of the fail-safe logic in at least the third PLC 102C to minimize the one or more effects of the at least one event ensures that the plurality of PLCs 102A-N can effectively manage and recover from adverse conditions. The fail-safe logic provides a comprehensive solution for safeguarding industrial processes, allowing the plurality of PLCs 102A-N to operate autonomously and securely even in the face of unforeseen events. The combination of action plans and fail-safe logics enhances the overall reliability and resilience of the PLC network 106, making the PLC network 106 well-suited for deployment in demanding industrial environments where safety and continuous operation are paramount.

In a scenario where the at least one event is predicted to occur in at least the third PLC 102C, the fail-safe logic is selected by at least one PLC of the plurality of PLCs 102A-N to ensure a coordinated response. For instance, the first PLC 102A may detect an impending power surge in at least the third PLC 102C based on the periodically received data package and one or more predictions of the retrained second machine learning model 104B. In such a scenario, the first PLC 102A selects a fail-safe logic designed to mitigate the aftereffects of the power surge.

When the fail-safe logic is executed by the first PLC 102A, the actions taken aim to minimize the one or more effects of the power surge in at least the third PLC 102C. The one or more effects of a power surge can include hardware damage, data corruption, system downtime, and potential safety hazards. For example, the fail-safe logic might involve the first PLC 102A initiating a sequence of actions that include sending commands to the third PLC 102C to immediately disconnect non-essential systems from the main power supply. The first PLC 102A may also activate surge protectors and voltage regulators to shield critical components from the sudden influx of power. Additionally, the first PLC 102A may redirect excess power to backup systems or energy storage devices to prevent overload. Issuing alerts to operators and maintenance teams to inform them of the situation.

By executing the fail-safe logic, the first PLC 102A helps to ensure that at least the third PLC 102C can withstand the power surge with minimal damage. The execution of the fail-safe logic helps prevent hardware damage by isolating vulnerable components and protecting critical infrastructure. Data corruption is mitigated by ensuring that essential systems are either shut down in a controlled manner or protected by surge protectors. System downtime is minimized by redirecting power to backup systems, allowing the third PLC 102C to maintain some level of operational functionality. Safety hazards are addressed by issuing alerts and taking preemptive measures to protect both the equipment and the personnel involved.

The coordinated execution of the fail-safe logic by the first PLC 102A demonstrates the resilience and adaptability of the PLC network 106. By having the plurality of PLCs 102A-N work together to address predicted events, the automation module 112 ensures that each PLC of the plurality of PLCs 102A-N can benefit from the collective intelligence and resources of the PLC network 106. This approach enhances the overall reliability and safety of the industrial process, making it well-suited for deployment in environments where rapid and effective responses to anomalies are critical.

The method of selecting and executing a fail-safe logic by at least one PLC in response to a predicted event in another PLC ensures that the automation module 112 can manage and mitigate the effects of adverse events effectively. By having robust fail-safe logics in place, the automation module 112 can maintain operational integrity and safety, even in the face of unforeseen challenges. A combination of predictive capabilities, action plans, and fail-safe logics provides a comprehensive solution for safeguarding industrial processes and ensuring continuous and reliable operation.

In other words, the retrained second machine learning model 104B enables at least the third PLC 102C to execute a corrective action in at least the third PLC 102C based on the prediction of the future occurrence of the at least one event. The corrective action is at least one of executing the selected action plan or executing the selected fail-safe logic.

The steps of the method claimed in the present invention can be performed by any PLC of the plurality of PLCs 102A-N on any other PLC within the network. Thus, the PLC network 106 is highly adaptable and can efficiently manage and optimize operations across the PLC network 106. For instance, the second PLC 102B can apply a machine learning model to monitor and analyze the performance parameters of the third PLC 102C, identify anomalies, and take corrective actions. Additionally, the same PLC can perform all the steps on itself, autonomously monitoring its own performance, detecting deviations, retraining its machine learning model, and implementing action plans and fail-safe logics as needed. This capability enhances the robustness and resilience of the PLC network 106, ensuring that each PLC can independently maintain optimal performance and safety, even in the absence of external network connectivity or human oversight.

The automation module 112 integrated within each PLC offers numerous advantages that significantly enhance the operational efficiency, reliability, and safety of industrial processes controlled by the plurality of PLCs 102A-N. One of the primary benefits is the capability for real-time monitoring and anomaly detection. By leveraging the plurality of machine learning models, the automation module 112 can continuously observe performance parameters and detect deviations from normal operating conditions. Early identification of potential issues allows for timely interventions, thereby reducing downtime and preventing costly equipment failures. Financially, the automation module 112 generates substantial savings in maintenance costs and minimizes production losses due to unplanned outages. Additionally, the ability to autonomously manage operations without the need for continuous external supervision reduces labor costs and enhances overall productivity.

Environmentally, the automation module 112 contributes to sustainable industrial practices by optimizing energy consumption and reducing waste. The plurality of machine learning models, which are TinyML models, are designed to operate with minimal computational resources, leading to lower power consumption. By continuously monitoring and adjusting operational parameters, the automation module 112 ensures that the plurality of PLCs 102A-N operate within optimal efficiency ranges, thereby conserving energy. Furthermore, early detection of anomalies and prompt corrective actions help prevent catastrophic failures that could lead to environmental hazards, such as chemical spills or emissions.

In harsh industrial environments where human oversight is limited or impractical, the automation module 112 ensures the operational integrity of the plurality of PLCs 102A-N. By autonomously retraining machine learning models based on real-time data, the PLC network 106 remains adaptive and resilient, capable of responding to dynamic conditions and emerging threats. The continuous learning and optimization process enhances the reliability and longevity of equipment in an industrial plant, thereby extending the operational life and maximizing return on investment. Financially, the reduced need for frequent manual interventions and lower failure rates contribute to significant cost savings. Environmentally, optimized operations lead to reduced resource consumption and minimized environmental impact. Overall, the automation module 112 provides a comprehensive solution that addresses both financial and environmental concerns, ensuring the sustainable and efficient operation of industrial processes.

The storage unit 206 may be a non-transitory storage medium configured for storing a database.

The communication interface 208 is configured for establishing communication sessions with other PLCs of the plurality of PLCs 102A-N.

The input-output unit 210 may include input devices a keypad, touch-sensitive display, camera (such as a camera receiving gesture-based inputs), etc. capable of receiving one or more input signals, such as user commands. The bus 214 acts as interconnect between the processing unit 202, the memory 204, and the input-output unit 210.

The network interface 212 is configured to handle network connectivity, bandwidth and network traffic between the plurality of PLCs 102A-N.

Those of ordinary skilled in the art will appreciate that the hardware depicted in FIG 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of an engineering system 102 as is unique to the present disclosure or necessary for an understanding of the present disclosure is depicted and described.

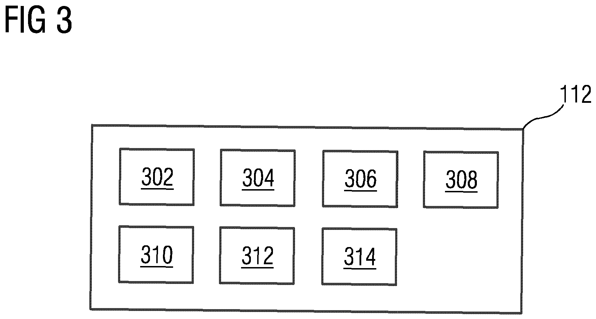

FIG 3 is a block diagram of an automation module 112, such as those shown in FIG 2, in which an embodiment of the present invention can be implemented. The automation module 112 plays a crucial role in managing and optimizing the operations of the plurality of PLCs 102A-N. The automation module 112 comprises several specialized sub-modules, each designed to perform specific functions that contribute to the overall efficiency and reliability of the system 100.

The request handler module 302 serves as the initial interface for incoming data and commands. The request handler module 302 is responsible for receiving requests from other PLCs within the PLC network 106 or from external systems. The request handler module 302 ensures that all incoming requests are properly validated and routed to the appropriate sub-modules for further processing. By efficiently managing incoming requests, the request handler module 302 helps maintain seamless communication and coordination among the plurality of PLCs 102A-N.

The data package generation module 304 is tasked with creating structured data packages that encapsulate critical information about the operational status of the PLCs. The data package generation module 304 collects data from various sensors and monitoring systems, including performance parameters such as temperature, power consumption, and communication load. The data package generation module 304 then organizes this data into a standardized format, making it easier to analyze and share with other PLCs or external systems. The generation of comprehensive data packages by the data package generation module 304 is essential for enabling accurate monitoring and decision-making across the PLC network 106.

The data package reception module 306 handles the reception of data packages sent from other PLCs within the PLC network 106. Upon receiving a data package, the data package reception module 306 validates the integrity and authenticity of the data before passing it on to the appropriate sub-modules for further analysis. The data package reception module 306 ensures that the information received from other PLCs is accurate and up-to-date, facilitating effective coordination and collaborative problem-solving within the network.

The retraining module 308 is dedicated to the continuous improvement of the machine learning models hosted within the PLCs. The retraining module 308 applies advanced learning algorithms to update the parameters of the machine learning models based on new data received from the data packages. By retraining the models, the retraining module 308 ensures that the machine learning models remain accurate and effective in detecting anomalies and predicting events. The local execution of the retraining process by the retraining module 308 enhances the adaptability and resilience of the PLC network 106, allowing it to operate efficiently even in the absence of continuous internet connectivity.

The prediction module 310 leverages the retrained machine learning models to analyze real-time data and predict the occurrence of potential events. The prediction module 310 identifies patterns and correlations within the performance parameters to forecast future anomalies or incidents. By providing timely and accurate predictions, the prediction module 310 enables the PLCs to take preemptive actions and mitigate risks before they escalate into significant issues. The predictive capabilities of the prediction module 310 are critical for maintaining the operational integrity and safety of the industrial processes controlled by the plurality of PLCs 102A-N.

The corrective action module 312 is responsible for selecting and executing appropriate action plans based on the predictions generated by the prediction module 310. The corrective action module 312 evaluates the predicted events and matches them with predefined action plans designed to address specific anomalies or incidents. Once an action plan is selected, the corrective action module 312 implements the corrective measures, such as adjusting control variables, activating cooling systems, or issuing alerts. The proactive interventions carried out by the corrective action module 312 help prevent potential failures and ensure the continuous and reliable operation of the PLCs.

The deployment module 314 manages the distribution and integration of retrained machine learning models across the PLC network 106. The deployment module 314 transfers the updated model parameters and structures from one PLC to another, ensuring that all PLCs benefit from the latest improvements. By securely deploying the retrained models, the deployment module 314 enhances the collective intelligence and performance of the PLC network 106. The deployment module 314 plays a vital role in maintaining the consistency and effectiveness of the machine learning models across the plurality of PLCs 102A-N.

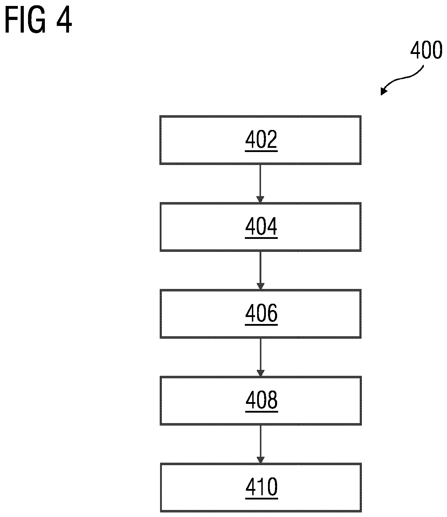

FIG 4 is a process flowchart illustrating an exemplary method 400 of managing events in a plurality of PLCs 102A-N, according to an embodiment of the present invention. FIG 4 is described in conjunction with FIG 1, FIG 2, and FIG 3. The method 400 is implemented inside the first PLC 102A.

At step 402, the automation module 112 causes the processing unit 202 to periodically receive a data package from the second PLC 102B. The data package comprises information used by the first machine learning model 104A to identify an occurrence of one or more events in the second PLC 102B.

At step 404, the automation module 112 causes the processing unit 202 to retrain the second machine learning model 104B by applying a learning algorithm on the received data package. The retraining is executed within the first PLC 102A to ensure that the second machine learning model 104B remains accurate and effective in identifying and predicting events.

At step 406, the automation module 112 causes the processing unit 202 to deploy the retrained second machine learning model 104B into at least the third PLC 102C. The deployment ensures that the updated model parameters and structure are transferred from the first PLC 102A to at least the third PLC 102C. The retrained second machine learning model 104B is utilized by at least the third PLC 102C to predict a future occurrence of at least one event in at least the third PLC 102C. The retrained model leverages the patterns and correlations learned during the retraining process to make accurate predictions. The retrained second machine learning model causes at least the third PLC 102C to execute a corrective action based on the prediction of the future occurrence of at least one event. The corrective action is designed to manage the predicted event effectively, thereby mitigating potential risks and ensuring continuous and reliable operation. The automation module 112 ensures that the at least one event predicted by the retrained second machine learning model is similar to the one or more events identified in the second PLC 102B.

At step 408, an action plan from a plurality of action plans based on the prediction of the future occurrence of the at least one event in the third PLC 102C. At step 410, the action plan is executed in the at least third PLC 102C to prevent the occurrence of the at least one event before the occurrence of the at least one event.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

### List of Reference Numerals:

- **100:** System for managing events in a plurality of PLCs.
- **102A-N:** Plurality of Programmable Logic Controllers (PLCs).
- **102A:** First PLC.
- **102B:** Second PLC.
- **102C:** Third PLC.
- **102D:** Fourth PLC.
- **102N:** Fifth PLC (and potentially beyond).
- **104A-N:** Plurality of Machine Learning Models.
- **104A:** First Machine Learning Model.
- **104B:** Second Machine Learning Model.
- **106:** PLC Network.
- **112:** Automation Module.
- **202:** Processing Unit.
- **204:** Accessible Memory.
- **206:** Storage Unit.
- **208:** Communication Interface.
- **210:** Input-Output Unit.
- **212:** Network Interface.
- **214:** Bus.
- **216:** Network Module.
- **302:** Request Handler Module.
- **304:** Data Package Generation Module.
- **306:** Data Package Reception Module.
- **308:** Retraining Module.
- **310:** Prediction Module.
- **312:** Corrective Action Module.
- **314:** Deployment Module.
- **400:** Method for managing events in a plurality of PLCs.
- **402:** Step of periodically receiving a data package from the second PLC.
- **404:** Step of retraining the second machine learning model.
- **406:** Step of deploying the retrained second machine learning model into at least the third PLC.
- **408** step of selecting an action plan
- **410** step of executing the action plan

## Claims

1. A method (400) of managing events in a plurality of PLCs (102A-N), the method comprising:
in a first PLC (102A) of a plurality of PLCs (102A-N) of a PLC network (106), wherein the plurality of PLCs (102A-N) comprises a second PLC (102B) and at least a third PLC (102C):
periodically receiving a data package from the second PLC (102B), wherein
the data package comprises information used by a first Machine learning model to identify an occurrence of one or more events in the second PLC (102B), and
the first Machine learning model is hosted in the second PLC (102B);
retraining a second Machine learning model by applying a learning algorithm on the received data package, wherein the retraining is executed within the first PLC (102A); and
deploying the retrained second Machine learning model into at least the third PLC (102C),
wherein the deployed second Machine learning model is utilizable by at least the third PLC (102C) to:
predict a future occurrence of at least one event in at least the third PLC (102C), and
execute a corrective action in at least the third PLC (102C) based on the prediction, thereby managing the at least one event; and
wherein the at least one event is similar to the one or more events.

2. The method of claim 1, wherein the one or more events are identified in the second PLC (102B) by applying the first Machine learning model on a plurality of performance parameters of the second PLC (102B).

3. The method of claim 1 and 2, wherein the corrective action is at least one of executing an action plan or executing a fail-safe logic.

4. The method of claim 3, further comprising:
selecting the action plan from a plurality of action plans based on the prediction of the future occurrence of the at least one event in the third PLC (102C); and
executing the action plan in the at least third PLC (102C) to prevent the occurrence of the at least one event before the occurrence of the at least one event.

5. The method of claim 3, further comprising:
selecting the fail-safe logic from a plurality of fail-safe logics based on a prediction of the future occurrence of the at least one event in at least the third PLC, wherein the fail-safe logic is configured to minimize one or more effects of an occurrence of the at least one event in at least the third PLC; and
initiating an execution of the fail-safe logic in the at least the third PLC to minimize the one or more effects of the at least one event after an occurrence of the at least one event in at least the third PLC.

6. The method of any of claims 1 and 2, wherein the plurality of PLCs is isolated from the internet.

7. The method of any of claims 1 and 2, wherein each Machine learning model of the plurality of Machine learning models is integrated with a specific PLC of the plurality of PLCs, and the Machine learning model is configured to monitor the plurality of performance parameters of the specific PLC dynamically to determine the occurrence of a plurality of events in the specific PLC.

8. The method of any of claims 1 and 2, wherein the data package comprises information on a first sequence of operations performed by the second PLC before the occurrence of the one or more events, and wherein the retrained second Machine learning model is configured to detect a second sequence of operations in at least the third PLC, wherein the second sequence of operations is similar to the first sequence of operations.

9. The method of of any of claims 1 and 2, wherein the retraining of the second Machine learning model occurs completely within the first PLC.

10. A system (100) for managing events in a plurality of PLCs (102A-N) comprising:
a plurality of PLCs (102) comprising a first PLC (102A), a second PLC (102B), and at least a third PLC (102C), wherein:
the second PLC (102B) is configured to periodically send a data package to the first PLC (102A), the data package comprising information used by a first Machine learning model to identify the occurrence of one or more events in the second PLC (102B), and the first Machine learning model is hosted in the second PLC (102B);
the first PLC (102A) is configured to:
retrain a second Machine learning model by applying a learning algorithm on the received data package, wherein
the retraining is executed within the first PLC (102A), and
the second Machine learning model is deployable in at least the third PLC (102C);
deploy the retrained second Machine learning model into at least the third PLC (102C), wherein the deployed second Machine learning model is utilizable by the at least the third PLC (102C) to:
predict the occurrence of at least one event in at least the third PLC (102C),
execute one or more corrective actions based on the prediction, thereby managing the at least one event in the plurality of PLCs (102AN), wherein the at least one event is similar to the one or more events.

11. The system (100) of claim 10, wherein the second PLC is configured to identify one or more events by applying the first Machine learning model on a plurality of performance parameters of the second PLC (102B).

12. The system (100) of claim 10, wherein at least the third PLC is configured to select an action plan from a plurality of action plans based on the prediction of the at least one event, and execute the action plan in the at least third PLC (102C) to prevent the occurrence of the at least one event before the occurrence of the at least one event.

13. The system (100) of claim 10, wherein the data package comprises information on a first sequence of operations performed by the second PLC before the occurrence of the one or more events, and the retrained second Machine learning model is retrained to detect a second sequence of operations in at least the third PLC, wherein the second sequence of operations is similar to the first sequence of operations.

14. A first PLC (102A) comprising:
a processing unit (202) configured to:
periodically receive a data package from a second PLC (102B), wherein the data package comprises information used by a first Machine learning model to identify the occurrence of one or more events in the second PLC (102B), and the first Machine learning model is hosted in the second PLC (102B);
retrain a second Machine learning model by applying a learning algorithm on the received data package, wherein the retraining is executed within the first PLC;
utilize the retrained second Machine learning model to predict the occurrence of at least one event in the first PLC (102A); and
execute one or more corrective actions based on the prediction, thereby managing the at least one event in the plurality of PLCs (102A-N), wherein the at least one event is similar to the one or more events.
